# EUROPÄISCHE PATENTSCHRIFT

(11) **EP 1 732 801 B1**
(45) Veröffentlichungstag und Bekanntmachung des Hinweises auf die Patenterteilung: **25.06.2008**
(21) Anmeldenummer: 05729832.5
(22) Anmeldetag: 17.03.2005
(51) Int. Cl.: B62D 25/14

(54) **QUERTRÄGER ODER STRUKTURBAUTEIL FÜR EIN KRAFTFAHRZEUG**
CROSSBEAM OR STRUCTURAL COMPONENT FOR A MOTOR VEHICLE
TRAVERSE OU COMPOSANT STRUCTUREL DESTINE A UN VEHICULE

(30) Priorität: 30.03.2004 DE 102004016175
(43) Veröffentlichungstag der Anmeldung: 20.12.2006
(73) Patentinhaber: Behr GmbH & Co. KG, 70469 Stuttgart (DE)
(72) Erfinder: MERKLE, Christian, 73655 Plüderhausen (DE); WOLF, Walter, 71570 Oppenweiler-Zell (DE)
(86) Internationale Anmeldenummer: PCT/EP2005/002815
(87) Internationale Veröffentlichungsnummer: WO 2005/097580

(56) Entgegenhaltungen:
- EP-A- 1 293 415
- DE-A1- 10 220 025
- DE-A1- 19 933 531
- US-A1- 2001 008 228
- US-A1- 2002 145 309

## Beschreibung

Die Erfindung betrifft einen Querträger oder ein Strukturbauteil für ein Kraftfahrzeug gemäß dem Oberbegriff des Anspruchs 1. Ein solcher Querträger ist aus der EP 1 293 415 A1 bekannt.

Aus der DE 102 21 654 A1 ist ein Querträger für ein Kraftfahrzeug bekannt, der aus einer oberen Halbschale und einer unteren Halbschale besteht, die an ihren einander zugewandten Enden Laschen aufweisen, die durch einen Klebstoff miteinander verklebt sind. Zur Befestigung von Elementen, wie beispielsweise der Lenksäule, ist am Querträger ein Halter mittels mehrerer Schrauben befestigt. Die Schrauben sind nach dem Verschrauben verklebt.

Am Querträger kann eine als Rohr ausgebildete Verstärkung angebracht sein, wobei das Rohr an seinen Enden zwecks Vereinfachung der Anbringung am Querträger in seinem Querschnitt verändert sein kann.

Ferner sind Querträger oder andere Strukturbauteile bekannt, an denen Halter angeschweißt oder auf sonstige Weise angebracht sind. In Folge der Materialverdoppelung wird das Gewicht erhöht und der zusätzliche Arbeitsgang führt zu einer Erhöhung der Herstellungskosten.

Derartige Querträger lassen jedoch noch Wünsche offen.

Es ist Aufgabe der Erfindung, einen verbesserten Querträger zur Verfügung zu stellen.

Diese Aufgabe wird gelöst durch einen Querträger oder ein Strukturbauteil mit den Merkmalen des Anspruchs 1. Vorteilhafte Ausgestaltungen sind Gegenstand der Unteransprüche. Der Einfachheit halber wird hierauf im Folgenden lediglich als auf einen Querträger Bezug genommen, jedoch kann ein entsprechend ausgebildetes Element auch an anderen Stellen als sonstiges Strukturbauteil verwendet werden.

Erfindungsgemäß ist ein Querträger vorgesehen, mit einem sich in seiner Längsrichtung erstreckenden Hohlraum, der leer oder ganz oder teilweise mit Elementen, wie Versteifungen, gefüllt ist, wobei der Querträger mindestens einen sich zumindest teilweise entlang seiner Längserstreckung erstreckenden, einstückig mit dem Material des Querträgers ausgebildeten und sich nach außen erstreckenden Bereich aufweist, wobei der sich nach außen erstreckende Bereich einen zweiten, sich in Längserstreckung des Querträgers erstreckenden Hohlraum aufweist. Dieser zweite Hohlraum ist insbesondere mit einem deutlich kleineren Querschnitt ausgebildet.

Bevorzugt sind mindestens zwei, insbesondere genau zwei, sich nach außen erstreckende Bereiche vorgesehen, die bevorzugt an gegenüberliegenden Seiten des ersten Hohlraums angeordnet sind.

Der Querträger ist vorzugsweise im Bereich seines ersten Hohlraums hohlzylindrisch, U-förmig oder polygonal, insbesondere rechteckförmig, ausgebildet. Beliebige andere Ausgestaltungen sind möglich.

Bevorzugt ist der Querträger, im Bereich seines zweiten Hohlraums im Wesentlichen hohlzylindrisch oder rechteckförmig ausgebildet, so dass gute Anbringungsmöglichkeiten für Anbauten oder zur Befestigung des Querträgers seinerseits vorgesehen sind. Ferner wirkt der zweite Hohlraum zusätzlich versteifend, so dass der Querträger leichter ausgebildet sein kann.

Der zweite Hohlraum weist vorzugsweise mindestens eine seitliche Öffnung zur Anbringung von Anbauten auf. Diese kann bevorzugt als Bohrung oder Gewindebohrung ausgebildet sein, welche zur Aufnahme einer Schraube geeignet ist, oder als Öffnung für eine Clipsverbindung, ein Einhängen oder eine sonstige Spreizverbindung. Dies ermöglicht eine einfache Anbringung von Anbauten, so dass die Herstellungskosten gesenkt werden können.

Der Querträger besteht insbesondere aus einem Strangpress- oder Walzprofil, vorzugsweise aus einem Aluminium-, Magnesium- oder Stahlprofil. Stahlprofile werden vorzugsweise gewalzt, rollgeformt oder aus mehreren Einzelteilen verbunden. Im Idealfall ist lediglich ein Ablängen des Querträgers und das Vorsehen von Öffnungen erforderlich, so dass er sehr kostengünstig hergestellt werden kann.

Zur Erhöhung der Anbindungssteifigkeit des Querträgers sind seine Enden bevorzugt verstärkt ausgebildet. Hierfür sind vorzugsweise Strangpressprofil-Abschnitte in den zweiten Hohlraum eingeführt und hierin befestigt. Das verstärkende Element kann eine beliebige Form aufweisen, jedoch entsprechen bevorzugt die Außenabmessungen des verstärkenden Elements, zumindest in so weit es in den zweiten Hohlraum eingeführt wird, den Innenabmessungen des zweiten Hohlraums. Sind zwei oder mehr zweite Hohlräume vorgesehen, so kann auch ein einziges verstärkendes Element vorgesehen sein, das mit entsprechend ausgebildeten Armen versehen ist, die in die einzelnen Hohlräume ragen.

Der Querträger weist vorzugsweise mindestens einen Hohlraum zum Durchführen eines Mediums auf, insbesondere von dem Fahrzeuginnenraum zuzuführender Luft. Ferner kann der Hohlraum auch als Kabelkanal verwendet werden.

Der Querträger kann versteifende Elemente aufweisen, insbesondere in Längsrichtung verlaufende, sich in radialer Richtung erstreckende Rippen. Diese sind bevorzugt Teil des Profils des Querträgers, müssen also nicht nachträglich an demselben angebracht werden. Auch können diese versteifenden Elemente bereichsweise versetzt zueinander ausgebildet sein. Als Formen kommen insbesondere Rippen, L-, C-, T-Profile, Schraubkanal-Profile, schwalbenschwanzartige Profile oder Profile mit einem durchgehenden Hohlraum, insbesondere mit kreis- oder rechteckförmigem Querschnitt, in Frage, wobei mehrere der genannten Profile nebeneinander angeordnet sein können.

Zur Erhöhung der Steifigkeit kann der Querträger versteifende Elemente aufweisen, wobei es sich beispielsweise um eine Kunststoffstruktur, vor zugsweise mit kreuzförmig verlaufenden Rippen oder einer wabenartigen Struktur, handelt. Diese kann relativ einfach, insbesondere außen und/oder in den Endbereichen, angespritzt werden und erhöht die Steifigkeit deutlich bei relativ geringem Gewicht. Trotz der versteifenden Elemente können im Innenraum des Querträgers Kanäle für ein durchzuführendes Medium vor gesehen sein.

Der oder die zweiten sich in Längsrichtung erstreckenden Hohlräume des Querträgers können bereichsweise entfernt sein, insbesondere um Bauraum einzusparen.

Im Folgenden wird die Erfindung anhand von mehreren Ausführungsbeispielen, teilweise mit Varianten, unter Bezugnahme auf die Zeichnung im Einzelnen erläutert. In der Zeichnung zeigen:

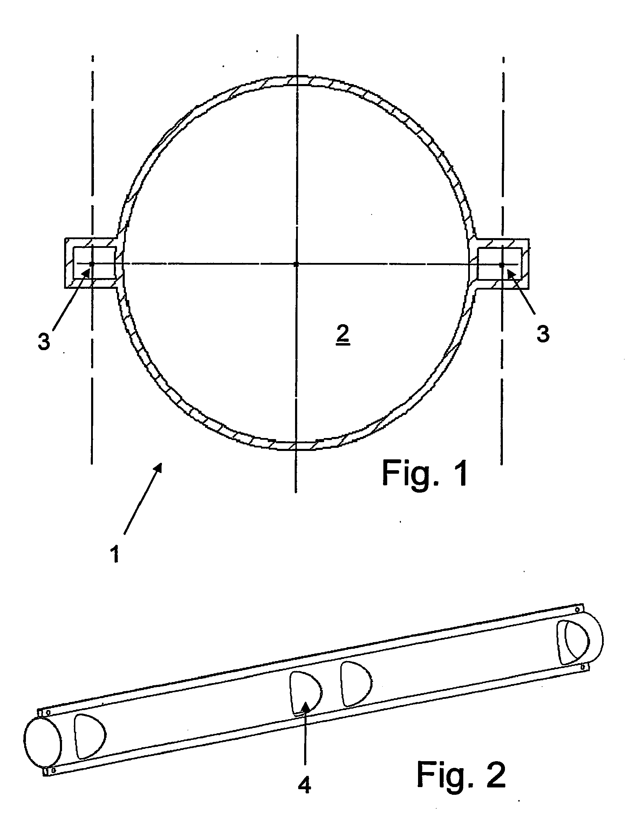

- Fig. 1: einen Schnitt durch einen Querträger gemäß dem ersten Ausführungsbeispiel ohne Anbauten,
- Fig. 2: eine perspektivische Ansicht des Querträgers von Fig. 1 ohne Anbauten,
- Fig. 3: eine erste Variante des ersten Ausführungsbeispiels,
- Fig. 4: eine zweite Variante des ersten Ausführungsbeispiels,

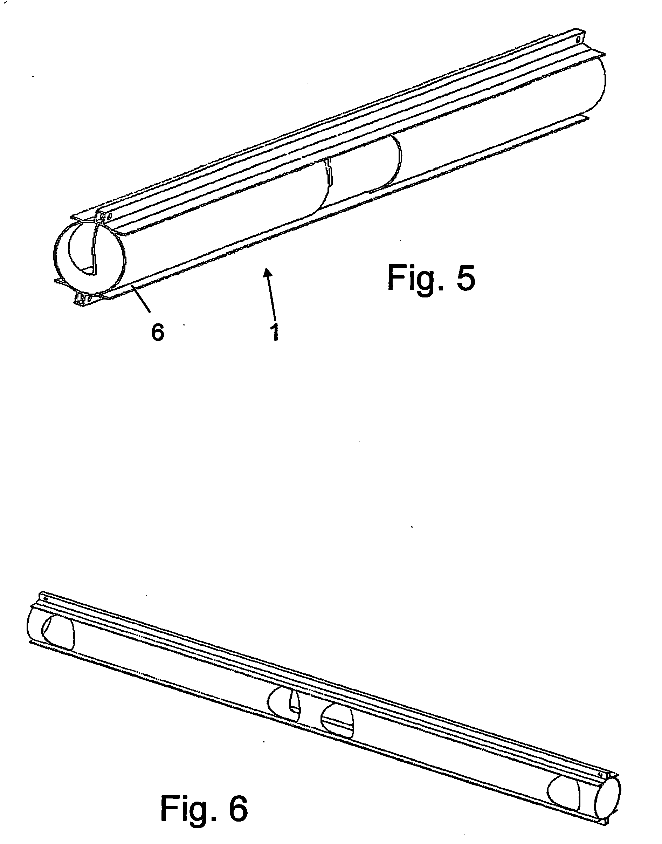

- Fig. 5: eine perspektivische Ansicht eines Querträgers gemäß einer dritten Variante des ersten Ausführungsbeispiels,
- Fig. 6: eine andere perspektivische Ansicht eines Querträgers gemäß der dritten Variante des ersten Ausführungsbeispiels,
- Fig. 7: einen Schnitt durch einen Querträger gemäß dem zweiten Ausführungsbeispiel ohne Anbauten,
- Fig. 8: eine perspektivische Ansicht des Querträgers von Fig. 7,
- Fig. 9: eine andere perspektivische Ansicht des Querträgers von Fig. 7,
- Fig. 10 bis 13: verschiedene Möglichkeiten zur Anbringung von Anbauten,
- Fig. 14 bis 21: verschiedene Querträger ohne Anbauten,
- Fig. 22: einen schematisch dargestellten Querträger mit einem damit verbundenen Element gemäß einem ersten Anwendungsfall,
- Fig. 23: eine Detailansicht des oberen Bereichs von Fig. 22,
- **Fig. 24**: einen weiteren schematisch dargestellten Querträger mit einem damit verbundenen Element gemäß einem zweiten Anwendungsfall,
- Fig. 25: eine Detailansicht des oberen Bereichs von Fig. 24.

Eine Querträger 1 eines Kraftfahrzeugs mit integrierter Luftführung wird gemäß dem ersten Ausführungsbeispiel durch ein Strangpressprofil gebildet, das mittels Strangpressen und nachfolgendem Bearbeiten, wobei unter anderem die Enden umgeformt werden, hergestellt ist. Vorliegend handelt es sich um eine Aluminium-Profil, jedoch sind auch andere Materialien, insbesondere Magnesium oder Stahl, möglich.

Das Profil weist einen zentralen, ersten Hohlraum 2 sowie, getrennt von diesem ausgebildet, zwei an den Längsseiten entlang der Längserstreckung des Querträgers 1 angeordnete, seitliche zweite Hohlräume 3 auf, die einander diametral gegenüberliegen. Der erste Hohlraum 2 weist einen kreisförmigen Querschnitt und die beiden zweiten Hohlräume 3 einen im Wesentlichen rechteckförmigen Querschnitt auf.

In dem ersten Hohlraum 2 ist gemäß dem ersten Ausführungsbeispiel die Durchführung von Luft vorgesehen, so dass der Querträger 1 neben seiner tragenden Funktion auch einen Teil des Kraftfahrzeug-Belüftungssystems bildet. Zur Vermeidung von Temperaturänderungen der durchzuführenden Luft ist im ersten Hohlraum 2 eine Isolation vorgesehen, die jedoch nicht dargestellt ist. Die Isolation kann beispielsweise mittels Koextrusion ausgebildet werden. Der Querträger 1 weist quer zu seiner Längserstreckung angeordnete Öffnungen 4 zum Ein- und Ausleiten der Luft auf. Anstelle oder neben Luft können auch andere Medien durch den Querträger 1 geleitet werden. Die beiden zweiten Hohlräume 3 dienen als Elemente für die Anbindung von Anbauten, worauf an späterer Stelle näher eingegangen wird.

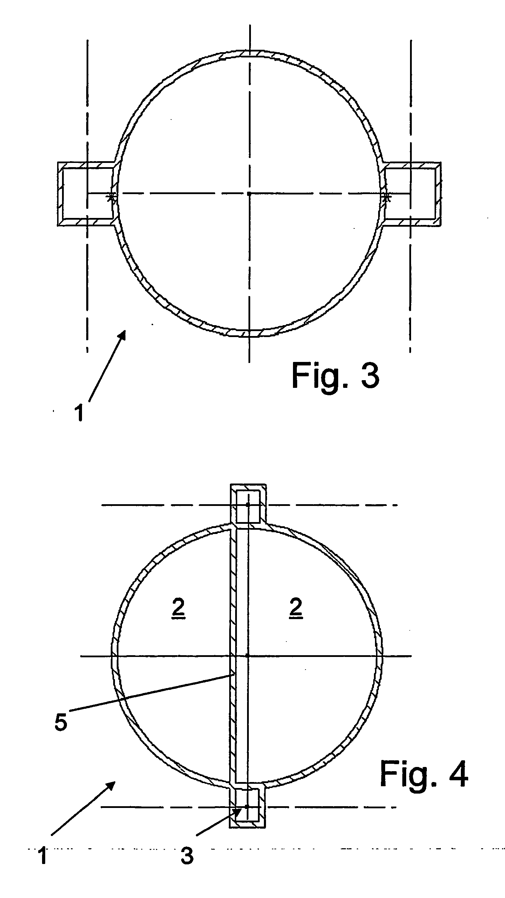

Die Fig. 3 zeigt eine Variante des ersten Ausführungsbeispiels mit etwas größer ausgebildeten zweiten Hohlräumen 3.

Die Enden des Querträgers 1 sind in Folge des Umformvorgangs verbreitert ausgebildet (nicht dargestellt), so dass sie als versteifendes Element dienen. Dadurch ergibt sich, dass das Verhältnis einer ersten Fläche und einem ersten Umfang in einem mittleren Querschnitt kleiner als das Verhältnis einer zweiten Fläche und einem zweiten Umfang in den beiden Endbereichen ist. Die verbreiterte Ausgestaltung der Endbereiche ermöglicht eine momentensteife Anbindung. Im Idealfall sind jedoch durchgehende Profile vorgesehen und werden beispielsweise in ihren Endbereichen beschnitten, beispielsweise mittels Laser- oder Wasserstrahl, Sägen, Fräsen oder Stanzen.

Eine zweite Variante des ersten Ausführungsbeispiels ist in Fig. 4 dargestellt. Hierbei ist der erste Hohlraum 2 von einer sich in Längsrichtung des Quer trägers 1 erstreckenden Trennwand 5 unterteilt, welche sich in Verlängerung einer der beiden Seitenwände der zweiten Hohlräume 3 außermittig quer durch den ersten Hohlraum 2 erstreckt. Weitere Rippen können nach Bedarf angebracht sein. Eine derartige Ausgestaltung ermöglicht beispielsweise die Durchleitung zweier unterschiedlicher Medien, oder ein Teil des Hohlraums 2 dient als Kabelkanal und der andere der Luftdurchleitung. Die Trennwand 5 kann an einer beliebigen Stelle angeordnet sein und auch einen Verlauf haben, der vom geraden Verlauf abweicht.

Gemäß einer dritten Variante des ersten Ausführungsbeispiels sind beidseitig der zweiten Hohlräume 3 zwei sich senkrecht zu den beiden Seitenflächen derselben erstreckende Flächen 6 vorgesehen, welche als Anlagefläche oder Anschlag für am Querträger 1 angebrachte Elemente sowie der zusätzlichen Versteifung des Querträgers 1 dienen. Zwischen den Flächen 6 können auf der Außenseite des Querträgers 1 auch weitere versteifende Strukturen angebracht sein, beispielsweise kann eine wabenartige oder mit sich kreuzenden Rippen ausgebildete Kunststoffstruktur vorgesehen sein.

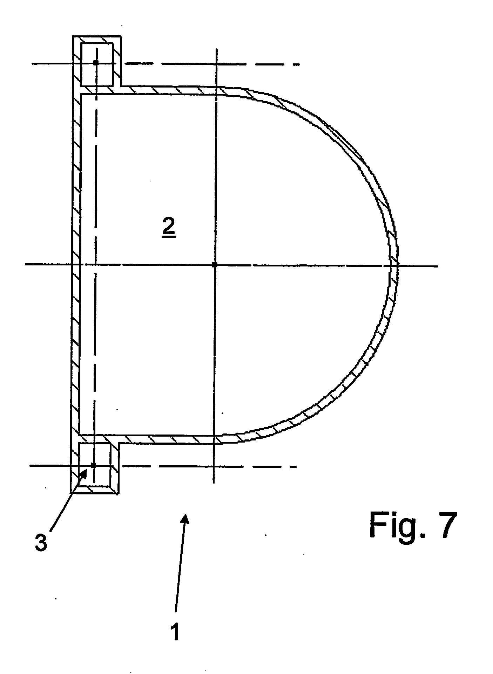

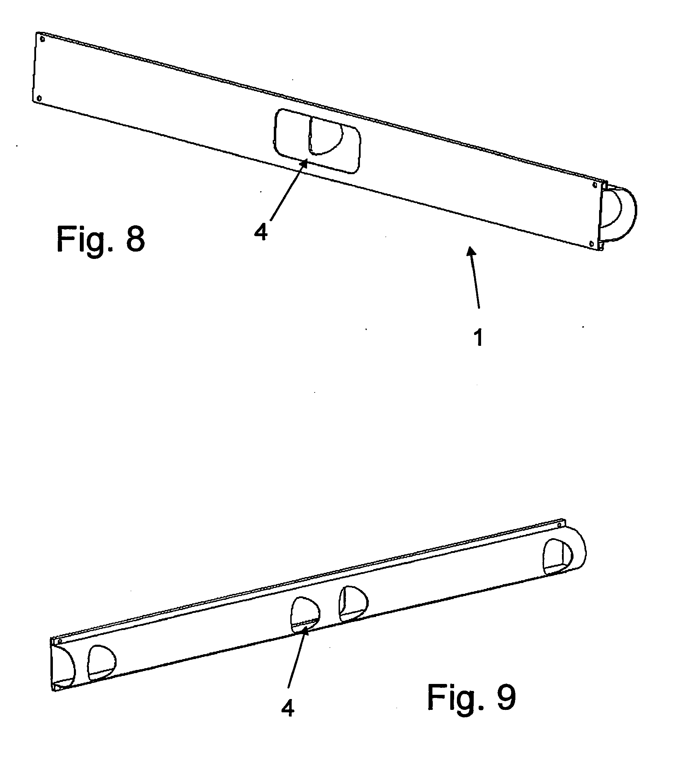

Die Figuren 7 bis 9 zeigen ein zweites Ausführungsbeispiel eines Querträgers 1, welcher eine eben ausgebildete Längsseite mit einer zentral angeordneten, etwa rechteckförmigen Öffnung 4 für die Lufteinleitung aufweist. Im mittleren Bereich des Querträgers 1 ist ein erster, großer Hohlraum 2 mit einem U-förmigen Querschnitt ausgebildet. Benachbart hierzu sind auf beiden äußeren Schenkelseiten im Bereich der äußeren Enden jeweils kleine zweite Hohlräume 3 mit rechteckförmigem Querschnitt ausgebildet. Im Bereich des ersten Hohlraums 2 sind vier Öffnungen 4 mit etwa kreisförmiger Gestalt zur Luftausleitung vorgesehen (nicht dargestellt).

Im Folgenden wird auf verschiedene Möglichkeiten der Anbindung von Anbauten oder der Anbringung des Querträger 1 an der A-Säule näher eingegangen.

Gemäß einer ersten Ausführungsform, die nicht in der Zeichnung dargestellt ist, weisen die äußeren Hohlräume, auf die im Folgenden teilweise auch als äußere Profile Bezug genommen wird, einen kreisförmigen Querschnitt auf, so dass eine axiale Befestigung des Querträgers vereinfacht wird.

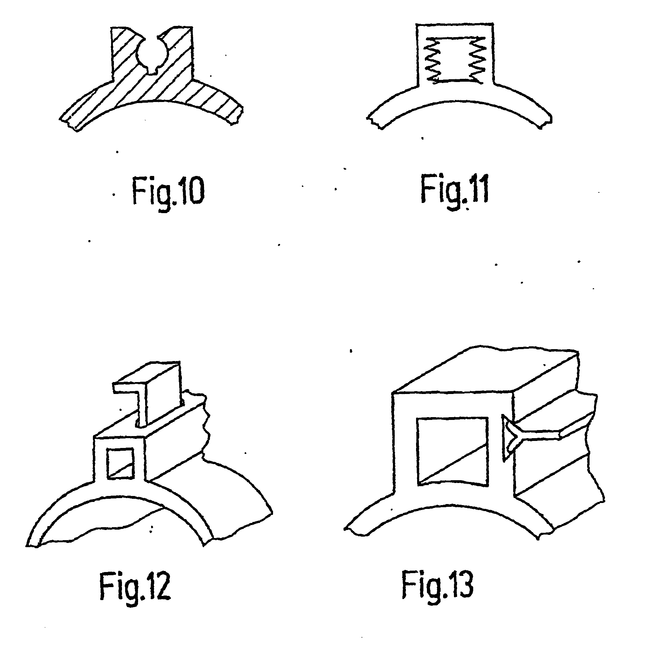

Fig. 10 zeigt eine seitlich offene Variante zur axialen Befestigung.

Fig. 11 zeigt eine Ausführungsform gemäß der in Richtung auf den ersten Hohlraum ein Schraubprofil in den zweiten Hohlräumen vorgesehen ist, so dass eine seitliche Befestigung des Querträgers oder eine direkte oder indirekte Befestigung von Anbauten am Querträger ermöglicht wird. Insbesondere kann das Profil als Schraubkanal-Profil (z.B. DIN 7513) ausgebildet sein. Das Schraubkanal-Profil kann auch um 90° gedreht sein gegenüber der Darstellung von Fig. 11. Alternativ können auch Bohrungen vorgesehen sein, in die Schrauben mit einem selbstschneidenden Gewinde eingeschraubt werden können.

Gemäß einer in Fig. 12 dargestellten Ausführungsform ist ein in Längsrichtung verlaufender Schlitz vorgesehen, in welchen beispielsweise Elemente eingehängt, eingeclipst oder auf sonstige Weise befestigt werden können.

Fig. 13 zeigt eine Ausführungsform gemäß der eine Schwalbenschwanznut in Längsrichtung des Querträgers an einer Seite eines äußeren Profils vor gesehen ist. In diese Nut kann ein Element seitlich eingeführt und beispielsweise mittels Umformen oder Festklemmen durch sich spreizende Schenkel nach dem Positionieren befestigt werden.

Beliebige andere Ausgestaltungen der äußeren Profile sind möglich, die eine gute Anbindung für Anbauten o.ä. zur Verfügung stellen. So können auch für ein Kalt-Press-Schweißen, Kaltformen, Prägen, Einstecken, Einrenken, Eindrehen, Einclipsen geeignete Ausgestaltung vorgesehen sein. Die äußeren Profile können dabei auch bereichsweise geöffnet sein. Beispielsweise kann in eine in einem der äußeren Profile vorgesehene langlochartige Öffnung ein Befestigungselement eines Airbags eingehängt sein. Ferner können die äußeren Profile über den gesamten Querträger vorgesehen oder aber in gewissen Bereichen desselben entfernt sein.

Ebenfalls können zusätzliche Verstärkungselemente am Querträger vorgesehen sein, die beispielsweise mittels Prägen, Hämmern, Innenhochdruckumformen, Außenhochdruckumformen, Schweißen, Löten, Eingießen, Kleben, Clinchen, Magnet-Umformen am Querträger angebracht oder hieran vorgesehen werden können.

Die Endbereiche des Querträgers können verstärkt sein, insbesondere durch hierin angeordnete, insbesondere eingesteckte U- oder andere Strangpressprofile. Eine Verstärkung ist ebenfalls durch ein Umformen der Endbereiche möglich.

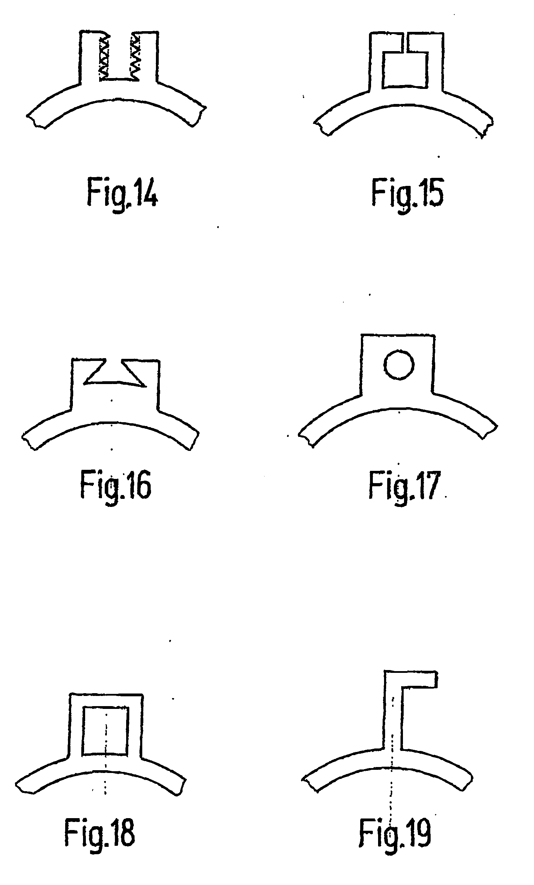

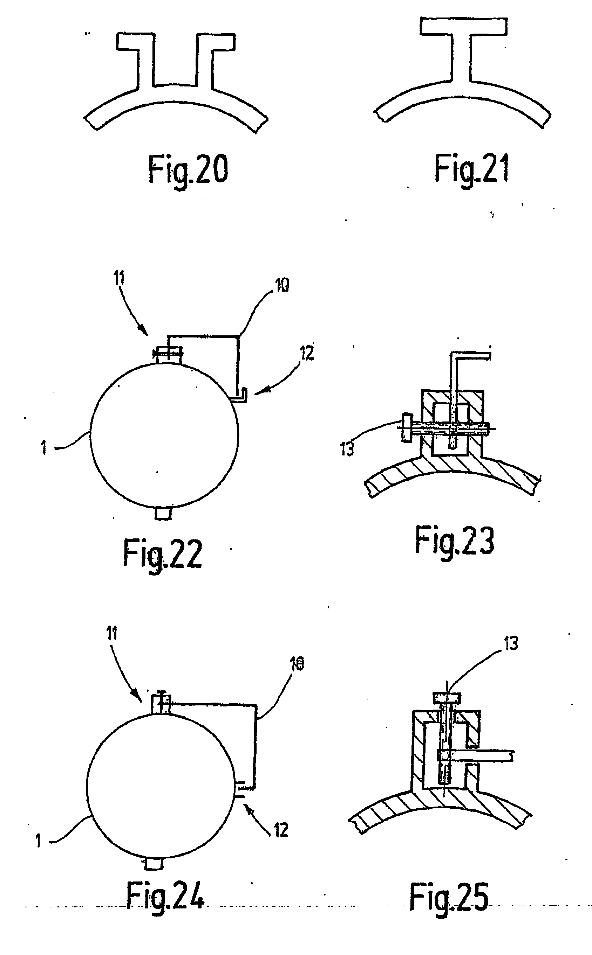

In den Figuren 14 bis 21 sind verschiedene Profile von verstärkenden, sich in Längsrichtung des nur angedeuteten Querträgers erstreckenden und zumindest teilweise und/oder bereichsweise als Anbindungsbereich zur Anbringung von Elementen am Querträger dienenden Bereichen beispielhaft dargestellt, wobei Fig. 14 ein offenes Einschraub-Profil, Fig. 15 zwei mit ihren Schenkeln zueinander zeigende L-Profile, Fig. 16 ein SchwalbenschwanzProfil, Fig. 17 ein Profil mit durchgehender kreisförmiger Öffnung, Fig. 18 ein Profil mit durchgehender quadratischer Öffnung, Fig. 19 ein einzelnes L-Profil, Fig. 20 zwei mit ihren Schenkeln zu entgegengesetzten Seiten zeigende L-Profile und Fig. 21 ein T-Profil zeigt.

Figuren 22 und 23 zeigen einen ersten Anwendungsfall, gemäß dem an einem nur schematisch dargestellten Querträger 1 mit Hilfe einer Schraube ein ebenfalls schematisch dargestelltes Element 10 angebracht ist, wobei der Querträger 1 einen ersten Anbindungsbereich 11 und einen zweiten Anbindungsbereich 12 aufweist. Der erste Anbindungsbereich 11 ist als Hohlprofil mit rechteckförmiger durchgehender Öffnung ausgebildet, wobei auf der dem Querträger 1 gegenüberliegenden Seite zumindest bereichsweise ein Schlitz vorgesehen ist, durch den ein Teilbereich des Elements 10 ragt. Der Teil ist mit Hilfe einer Schraube 13 befestigt, die durch eine Öffnung auf einer Seite des Hohlprofils und durch eine Öffnung im Teilbereich des Elements 10 gesteckt und in eine Gewindebohrung auf der anderen Seite des Hohlprofils eingeschraubt ist (siehe Fig. 23). Andere Befestigungsmöglichkeiten, beispielsweise mit einer Schraube und Mutter, sind möglich. Das Element 10 ist mit einem anderen Teilbereich in einer nutartigen Aufnahme, weiche den zweiten Anbindungsbereich 12 bildet und durch ein sich in Längsrichtung des Querträgers 1 erstreckendes L-Profil gebildet ist. Auf Grund der zu er wartenden Belastungen des Elements 10 ist im Bereich des zweiten Anbindungsbereichs 12 keine zusätzliche Fixierung vorgesehen, eine solche ist aber auf beliebige Weise möglich, beispielsweise auch mittels einer Klebe- oder Schweißverbindung.

Alternativ zum Vorsehen des L-förmigen Profils kann auch ein zumindest bereichsweise auf einer Seite offenes Hohlprofil verwendet werden.

Figuren 24 und 25 zeigen einen zweiten Anwendungsfall, gemäß dem an einem nur schematisch dargestellten Querträger 1 mit Hilfe einer Schraube 13 ein ebenfalls schematisch dargestelltes Element 10 angebracht ist, wobei der Querträger 1 wiederum einen ersten Anbindungsbereich 11 und einen zweiten Anbindungsbereich 12 aufweist. Diesmal erfolgt das Einschrauben der Schraube 13 in den ersten Anbindungsbereich in radialer Richtung bezüglich des Querträgers, wobei die Schraube 13 fest im entsprechenden von der Seite her in den ersten Anbindungsbereich 11 eingesteckten Teilbereich des Elements 10 eingeschraubt ist. Der zweite Anbindungsbereich 12 wird durch zwei parallel zueinander in Längsrichtung des Querträgers 1 verlaufenden, eine Nut bildenden Rippen gebildet, in welche der zweite Teilbereich des Elements 10 eingeschoben ist.

Alternativ zum Vorsehen von Rippen kann auch ein zumindest bereichsweise seitlich offenes Hohlprofil verwendet werden.

### Bezugszeichenliste

- 1: Querträger
- 2: erster Hohlraum
- 3: zweiter Hohlraum
- 4: Öffnung
- 5: Trennwand
- 10: Element
- 11: erster Anbindungsbereich
- 12: zweiter Anbindungsbereich
- 13: Schraube

## Patentansprüche

1. Querträger (1), insbesondere für ein Kraftfahrzeug, mit einem sich in Längsrichtung des Querträgers (1) erstreckenden Hohlraum, der leer oder ganz oder teilweise mit Elementen, wie Versteifungen, gefüllt ist, und mindestens einen sich zumindest teilweise entlang seiner Längserstreckung erstreckenden, einstückig mit dem Material des Querträgers (1) ausgebildeten und sich nach außen erstreckenden Bereich aufweist, wobei der sich nach außen erstreckende Bereich einen zweiten, sich in Längserstreckung des Querträgers (1) erstreckenden Hohlraum (3) aufweist, **dadurch gekennzeichnet, dass** der oder die zweiten sich in Längsrichtung erstreckenden Hohlräume des Querträgers (1) geschlossen ausgebildet sind.

2. Querträger nach Anspruch 1, **dadurch gekennzeichnet, dass** der Querträger (1) mindestens zwei sich nach außen erstreckende Bereiche aufweist.

3. Querträger nach Anspruch 2, **dadurch gekennzeichnet, dass** die sich nach außen erstreckende Bereiche äquidistant zueinander angeordnet sind.

4. Querträger nach einem der vorhergehenden Ansprüche, **dadurch gekennzeichnet, dass** der Querträger (1) im Bereich seines ersten Hohlraums (2) hohlzylindrisch, geschlossen U-förmig oder polygonal ausgebildet ist.

5. Querträger nach einem der vorhergehenden Ansprüche, **dadurch gekennzeichnet, dass** der Querträger (1) im Bereich seines zweiten Hohlraums (3) hohlzylindrisch oder rechteckförmig ausgebildet ist.

6. Querträger nach Anspruch 5, **dadurch gekennzeichnet, dass** der zweite Hohlraum (3) mindestens eine seitliche Öffnung zur Anbringung von Anbauten aufweist.

7. Querträger nach Anspruch 6, **dadurch gekennzeichnet, dass** die Öffnung als Bohrung oder Gewindebohrung ausgebildet ist, welche zur Aufnahme einer Schraube geeignet ist, oder als Öffnung für eine Clipsverbindung, ein Einhängen oder eine sonstige Spreizverbindung ausgebildet ist.

8. Querträger nach einem der vorhergehenden Ansprüche, **dadurch gekennzeichnet, dass** der Querträger (1) aus einem Strangpress- oder Walzprofil gebildet ist.

9. Querträger nach Anspruch 8, **dadurch gekennzeichnet, dass** der Querträger (1) ein Aluminium-, Magnesium- oder Stahlprofil ist.

10. Querträger nach einem der vorhergehenden Ansprüche, **dadurch gekennzeichnet, dass** die Enden des Querträgers (1) verstärkt sind.

11. Querträger nach einem der vorhergehenden Ansprüche, **dadurch gekennzeichnet, dass** der Querträger (1) mindestens einen Hohlraum (2) zum Durchführen eines Mediums aufweist.

12. Querträger nach einem der vorhergehenden Ansprüche, **dadurch gekennzeichnet, dass** der Querträger (1) versteifende Elemente aufweist.

13. Querträger nach Anspruch 12, **dadurch gekennzeichnet, dass** die versteifenden Elemente durch mindestens eine Kunststoffstruktur gebildet sind.

14. Querträger nach Anspruch 12 oder 13, **dadurch gekennzeichnet, dass** die versteifenden Elemente durch kreuzförmig verlaufende Rippen oder wabenartige Strukturen gebildet sind.

15. Querträger nach einem der vorhergehenden Ansprüche, **dadurch gekennzeichnet, dass** der oder die zweiten sich in Längsrichtung erstreckenden Hohlräume des Querträgers (1) bereichsweise entfernt sind.

## Claims

1. A crossbeam (1), in particular for a motor vehicle, having a void extending along its length which is empty or wholly or partially filled with elements such as reinforcing elements and has at least one area extending at least partially along its length which is made in one piece with the material of the crossbeam (1) and extends outwards, the outward extending area having a second void (3) which extends along the length of the crossbeam (1),
**characterised in that**
the second void or voids extending along the length of the crossbeam (1) is/are closed.

2. A crossbeam in accordance with claim 1,
**characterised in that**
the crossbeam (1) has at least two outward extending areas.

3. A crossbeam in accordance with claim 2,
**characterised in that**
the outward extending areas are positioned equidistant from one another.

4. A crossbeam in accordance with one of the preceding claims,
**characterised in that**
in the area of its first void (2) the crossbeam (1) is shaped in the manner of a hollow cylinder, a closed U-shape or a polygon.

5. A crossbeam in accordance with one of the preceding claims,
**characterised in that**
in the area of its second void (3) the crossbeam (1) is shaped in the manner of a hollow cylinder or rectangular box.

6. A crossbeam in accordance with claim 5,
**characterised in that**
the second void has at least one lateral opening for mounting extensions.

7. A crossbeam in accordance with claim 6,
**characterised in that**
the opening is designed as a hole or threaded hole suitable for taking a screw or as an opening for a clip connector, a suspended connector or another form of expansion connector.

8. A crossbeam in accordance with one of the preceding claims,
**characterised in that**
the crossbeam (1) is made from an extruded or rolled section.

9. A crossbeam in accordance with claim 8,
**characterised in that**
the crossbeam (1) is an aluminium, magnesium or steel section.

10. A crossbeam in accordance with one of the preceding claims,
**characterised in that**
the ends of the crossbeam (1) are reinforced.

11. A crossbeam in accordance with one of the preceding claims,
**characterised in that**
the crossbeam (1) has at least one void (2) through which a medium is passed.

12. A crossbeam in accordance with one of the preceding claims,
**characterised in that**
the crossbeam (1) has reinforcing elements.

13. A crossbeam in accordance with claim 12,
**characterised in that**
the reinforcing elements take the form of at least one plastic structure.

14. A crossbeam in accordance with claim 12 or 13,
**characterised in that**
the reinforcing elements take the form of criss-crossing ribs or honeycomblike structures.

15. A crossbeam in accordance with one of the preceding claims,
**characterised in that**
the second void or voids extending along the length of the crossbeam (1) is/are positioned at a distance in certain areas.

## Revendications

1. Traverse (1), en particulier pour un véhicule automobile, comprenant un espace creux s'étendant dans le sens longitudinal de la traverse (1), espace creux qui est vide ou rempli complètement ou partiellement d'éléments, tels que des renforts, et présente au moins une zone s'étendant au moins partiellement suivant sa dimension longitudinale, configurée en formant un seul et même ensemble avec le matériau de la traverse (1) et s'étendant vers l'extérieur, où la zone s'étendant vers l'extérieur présente un deuxième espace creux (3) s'étendant suivant la dimension longitudinale de la traverse (1),
**caractérisée en ce que** le premier espace creux ou les deuxièmes espaces creux de la traverse (1), s'étendant dans le sens longitudinal, est ou sont configuré(s) en étant fermé(s).

2. Traverse selon la revendication 1, **caractérisée en ce que** la traverse (1) présente au moins deux zones s'étendant vers l'extérieur.

3. Traverse selon la revendication 2, **caractérisée en ce que** les zones s'étendant vers l'extérieur sont disposées en étant équidistantes entre elles.

4. Traverse selon l'une quelconque des revendications précédentes, **caractérisée en ce que** la traverse (1), dans la zone de son premier espace creux (2), est configurée en étant cylindriquement creuse, fermée en forme de U ou de forme polygonale.

5. Traverse selon l'une quelconque des revendications précédentes, **caractérisée en ce que** la traverse (1), dans la zone de son deuxième espace creux (3), est configurée en étant cylindriquement creuse ou de forme rectangulaire.

6. Traverse selon la revendication 5, **caractérisée en ce que** le deuxième espace creux (3) présente au moins une ouverture latérale pour la fixation de pièces rapportées.

7. Traverse selon la revendication 6, **caractérisée en ce que** l'ouverture est configurée comme un perçage ou un perçage fileté qui est approprié pour le logement d'une vis, ou bien est configurée comme une ouverture pour un assemblage clipsé, une fixation en suspension ou un assemblage expansible quelconque.

8. Traverse selon l'une quelconque des revendications précédentes, **caractérisée en ce que** la traverse (1) est formée à partir d'un profil extrudé ou laminé.

9. Traverse selon la revendication 8, **caractérisée en ce que** la traverse (1) est un profilé en aluminium, en magnésium ou en acier.

10. Traverse selon l'une quelconque des revendications précédentes, **caractérisée en ce que** les extrémités de la traverse (1) sont renforcées.

11. Traverse selon l'une quelconque des revendications précédentes, **caractérisée en ce que** la traverse (1) présente au moins un espace creux (2) pour le passage d'un fluide.

12. Traverse selon l'une quelconque des revendications précédentes, **caractérisée en ce que** la traverse (1) présente des éléments de renfort.

13. Traverse selon la revendication 12, **caractérisée en ce que** les éléments de renfort sont formés par au moins une structure en matière plastique.

14. Traverse selon la revendication 12 ou 13, **caractérisée en ce que** les éléments de renfort sont formés par des nervures s'étendant de façon cruciforme ou par des structures en nid d'abeilles.

15. Traverse selon l'une quelconque des revendications précédentes, **caractérisée en ce que** le premier espace creux ou les deuxièmes espaces creux de la traverse (1), s'étendant dans le sens longitudinal, est ou sont éloigné(s) par zones.
